# EUROPEAN PATENT SPECIFICATION

(11) **EP 3 762 336 B1**
(45) Date of publication and mention of the grant of the patent: **01.06.2022**
(21) Application number: 18769472.4
(22) Date of filing: 30.07.2018
(51) Int. Cl.: C02F 1/34

(54) **METHOD FOR THE CAVITATION CLEANING OF WATER-BASED SUBSTANCES AND EQUIPMENT FOR THE IMPLEMENTATION OF THE METHOD**
VERFAHREN ZUR KAVITATIONSREINIGUNG VON WASSERBASIERTEN STOFFEN UND VORRICHTUNG ZUR DURCHFÜHRUNG DES VERFAHRENS
PROCÉDÉ DE NETTOYAGE PAR CAVITATION DE SUBSTANCES AQUEUSES ET DISPOSITIF POUR LA MISE EN OEUVRE DU PROCÉDÉ

(30) Priority: 06.03.2018 HU 1800081
(43) Date of publication of application: 13.01.2021
(73) Proprietor: Cetltech-Paper Kft., 9400 Opron (HU)
(72) Inventor: CSÓKA, Levente, Sopron (HU); DÓKA, Gábor, Sopron (HU); KOLONICS, Ottó, Sopron (HU)
(74) Representative: Ronaszéki, Tibor
(86) International application number: PCT/HU2018/000034
(87) International publication number: WO 2019/171090

(56) References cited:
- HU-A2- 1 500 158
- US-A1- 2017 306 982
- US-B1- 6 386 751

## Description

The object of the invention relates to equipment for the cavitation cleaning of water-based substances, which contains an external delimiting body enclosing a reaction space, and an internal delimiting body rotatably positioned in the reaction space of the external delimiting body, where the internal delimiting body has a rotation axle, the external delimiting body and the internal delimiting body are arranged in an equipment housing, the external delimiting body is supplied with at least one inlet opening suitable for introducing the substance to be cleaned, and an outlet opening serving for discharging the cleaned substance, the internal delimiting body is delimited by a rotating body mantle shaped external covering surface and by end surfaces closing off two ends of the external covering surface, while the external delimiting body has a cylindrical mantle shaped internal covering surface encompassing the reaction space, the external covering surface of the internal delimiting body and the internal covering surface of the external delimiting body are coaxial with each other, the internal delimiting body has cavitation inducing elements suitable for influencing the physical characteristic of the substance to be cleaned, the rotation axle is firmly fixed to the internal delimiting body coaxially to the axis of rotation of the internal delimiting body, but only at the second end surface of the internal delimiting body, and therefore the rotation axle is only rotatably connected to the external delimiting body at one location, while the inlet opening is located in the external delimiting body opposite the first end surface of the internal delimiting body, the outlet opening is formed in the external delimiting body opposite the second closing surface of the external delimiting body closing off the internal delimiting body.

The object of the invention also relates to a method for the cavitation cleaning of water-based substances by the invented equipment, during which a substance to be cleaned is transported from a supply pipe through the inlet opening to the first end surface of the rotating internal delimiting body and introduced into the reaction space delimited by the internal covering surface of the external delimiting body standing along this closed first end surface and by the external covering surface of the rotating inner delimiting body, the substance to be cleaned introduced into the reaction space is forced to flow in an axial direction, and a shear force is exerted onto the axially flowing substance to be cleaned with the help of the external covering surface of the rotating internal delimiting body, beside which bubbles are formed in the bulk phase of the substance to be cleaned by the cavitation inducing elements established in the external covering surface of the rotating internal delimiting body, and the cleaning of the substance to be cleaned is performed by the cavitation effect resulting in shock waves created when the bubbles burst.

Water-based liquids are used in many places for industrial and private purposes. These water-based substances become contaminated in various ways in the course of their use. For reasons of environmental protection the contaminated water-based substances must be cleaned before they are returned to the water catchment.

Numerous apparatuses and methods have been developed for the cleaning of such water-based substances. A possible method used for cleaning is so-called cavitation cleaning. The essence of cavitation cleaning is that active radicals, such as OH, H, are created in the course of the bursting of the cavitation cavities, i.e. bubbles saturated with steam during the cavitation process, i.e. bubbles. By being diffused into the bulk phase of contaminated waters that require cleaning these OH radicals react with the biological and other contaminants present there and help the contaminants to break down, oxidise, and help phase separation and cleaning. Cavitation cavities may be produced using many different types of device, including, among others, with a piezo-acoustic vibrating head, various hydrodynamic devices and even using a Venturi tube.

Patent specification registration number HU 221.784, for example, discloses a device serving for the cleaning of wastewater in which the cavitation micro-bubbles assisting with the cleaning arrive into the reaction space via several high-pressure nozzles. This solution has a complex structural arrangement, uses a significant amount of energy and is susceptible to faults.

European patent specification registration number HU E 006.443 is also known of, this mentions a sieve that is positioned in the equipment used for treating liquids at an angle, the role of which sieve is to create cavitation bubbles in the liquid when it is forced through the apertures in the sieve.

However, in this solution the creation of the cavitation bubbles only depends on the speed of the liquid, and their creation is quite haphazard, therefore this device cannot be viewed as a solution in which cavitation cleaning may be realised effectively.

Patent specification registration number HU 230.776 presents a more preferable cavitation cleaning solution. The essence of this is that a substance that is to be cleaned is transported into the reaction space in parallel to the axis of rotation of the rotor of the cavitation cleaning device and there in the reaction space with its suitably small width the main direction of flow of the substance to be cleaned also corresponds to the direction of the axis of rotation of the rotor. In this way shear forces are created in the axially flowing substance to be cleaned that result in cavitation bubbles being formed in the liquid to be cleaned that when they burst exert both a physical and chemical effect on the contaminants present in the substance to be cleaned, fragmenting and oxidising them, as a consequence of which the cleaning of the water-based substance may be efficiently performed without any other substances being introduced.

The deficiency of this solution, however, is that as the liquid to be cleaned becomes more distant from the inlet point, in a section of the reaction space more distant from the inlet opening, the cavitation cleaning effect lessens as a result of the flow conditions established in the reaction space, therefore depending on the degree of contamination of the medium to the treated, it may even need to be passed through the device several times. And this increases the time required for the desired degree of cleaning.

The objective of the present invention was to create equipment that makes use of the advantages of the solution according to patent registration number HU 230.776, but that increases its cleaning effectiveness, and therefore, in this way, makes cavitation liquid cleaning more economical,

The patent specifications US 6.386.751 and US 2017/306982 also introduce cavitation equipments, but the operating priciple and the construction of them are different.

The basis of the solution according to the invention was formed by the observation that if the water-based substance to be cleaned is fed into the cavitation reaction space not at one place but, instead, through several openings suitably positioned as compared to each other, then the effectiveness of the cleaning may be increased, and so a given amount of medium to be cleaned may be cleaned in one step with a better effect, which, in the end, also reduces the specific cleaning costs as well as the treatment time required for the cleaning, and so the task may be solved.

Starting out from the above the basis of the idea behind the invention was formed by the recognition that if the supply pipe is, in a completely unconventional manner, branched into several parts, and if in a novel way a part of the medium to be cleaned is released into a rear part of the cylindrical ring shaped reaction space distant from the inlet opening in a radial direction through at least one branch, then the cavitation bubbles are able to exert a much more effective cleaning effect in this still untreated water-based substance than in the part of the water-based substance to be cleaned that entered the reaction space via the inlet opening, and reaches this rear part of the reaction space in an already pre-treated condition, in this way a unit of water-based substance to be cleaned may be cleaned with greater efficiency, if it is introduced at several different locations, and so the task may be solved.

In accordance with the set objective the equipment according to the invention for the cavitation cleaning of water-based substances, - which contains an external delimiting body enclosing a reaction space, and an internal delimiting body rotatably positioned in the reaction space of the external delimiting body, where the internal delimiting body has a rotation axle, the external delimiting body and the internal delimiting body are arranged in an equipment housing, the external delimiting body is supplied with at least one inlet opening suitable for introducing the substance to be cleaned, and an outlet opening serving for discharging the cleaned substance, the internal delimiting body is delimited by a rotating body mantle shaped external covering surface and by end surfaces closing off two ends of the external covering surface, while the external delimiting body has a cylindrical mantle shaped internal covering surface encompassing the reaction space, the external covering surface of the internal delimiting body and the internal covering surface of the external delimiting body are coaxial with each other, the internal delimiting body has cavitation inducing elements suitable for influencing the physical characteristics of the substance to be cleaned, the rotation axle is firmly fixed to the internal delimiting body coaxially to the axis of rotation of the internal delimiting body, but only at the second end surface of the internal delimiting body, and therefore the rotation axle is only rotatably connected to the external delimiting body at one location, while the inlet opening is located in the external delimiting body opposite the first end surface of the internal delimiting body, the outlet opening is formed in the external delimiting body opposite the second closing surface of the external delimiting body closing off the internal delimiting body, - is established in such a way that at least one post-supply opening is established in the part of the internal covering surface of the external delimiting body neighbouring the external covering surface of the internal delimiting body, and the post-supply opening is connected to the supply pipe connected to the inlet opening via a linking pipe so as to allow the flow of liquid.

A further feature of the equipment according to the invention may be that a dispensing line suitable for discharging water with conductivity of 1 to 3 µS/cm is linked to the supply pipe and/or to the linking pipe and/or to the reaction space of the external delimiting body.

In the case of another embodiment of the equipment according to the invention the end surface closing off the end of the external covering surface of the internal delimiting body at the inlet opening of the external delimiting body is conical in shape. The cone angle of the end surface of the internal delimiting body is preferably between 165° and 179°.

In the case of yet another different embodiment of the equipment according to the invention the cavitation inducing elements of the external covering surface of the internal delimiting body are formed by an arranged group of depressions machined into the external covering surface of the internal delimiting body. Optionally, in addition to the cavitation inducing elements arranged in the external covering surface of the internal delimiting body, further cavitation inducing elements are arranged in the internal covering surface of the external delimiting body.

From the point of view of the equipment it may be favourable if an arranged group of depressions machined in the internal covering surface of the external delimiting body form the cavitation inducing elements located on the internal covering surface of the external delimiting body.

In the case of another, different embodiment of the equipment according to the invention the width of the cylindrical ring shaped gap located between the internal covering surface of the external delimiting body and the external covering surface of the inner delimiting body is between 1.5 and 12 mm.

In the case of another embodiment of the equipment the outlet opening serving for discharging the cleaned substance is established in the part of the closing sheet of the external delimiting body opposite the second end surface of the internal delimiting body in the vicinity of the internal covering surface.

In accordance with the set objective, the method according to the invention for the cavitation cleaning of waters-based substances by the invented equipment, - during which a substance to be cleaned is transported from a supply pipe through the inlet opening to the first end surface of the rotating internal delimiting body and introduced into the reaction space delimited by the internal covering surface of the external delimiting body standing along this closed first end surface and by the external covering surface of the rotating inner delimiting body, the substance to be cleaned introduced into the reaction space is forced to flow in an axial direction, and a shear force is exerted onto the axially flowing substance to be cleaned with the help of the external covering surface of the rotating internal delimiting body, beside which bubbles are formed in the block phase of the substance to be cleaned by the cavitation inducing elements established in the external covering surface of the rotating internal delimiting body, and the cleaning of the substance to be cleaned is performed by the cavitation effect resulting in shock waves created when the bubbles burst, - is based on that a part of the substance to be cleaned is directed into the linking pipe connected to the supply pipe, and is directly guided onto the external covering surface of the internal delimiting body via the linking pipe and out through the post-supply opening and in this way the treating of the entire amount of substance to be cleaned is performed with the use of at least two independent supply points, and the cleaned substance is discharged from the reaction space after a treating time of from 1 to 120 seconds.

A further feature of the method according to the invention may be that water with a conductivity of 1 to 3 µS/cm is inserted into the substance to be cleaned in the supply pipe and/or in the linking pipe and/or in the reaction space of the external delimiting body, and this is mixed with the substance to be cleaned and then the cleaning is performed in this way.

The greatest advantage of the equipment according to the invention and the cavitation cleaning method that may be performed with it is that as a result of the entirely unusual, novel divided supply, the water-based substance inserted into the reaction space in a separated way may be cleaned more efficiently, and, on the one part, the cleaning cost of a unit of substance, and, on the other part, the time required to achieve the suitable degree of cleaning may be reduced.

As a result of this a given volume of water-based substance to be cleaned may either be cleaned in a given amount of time using smaller-scale equipment than would be required in the case of conventional equipment or the same task may be performed in a shorter amount of time using equipment according to the invention that is equal in size to traditional equipment. Therefore, by using the equipment according to the invention either the investment costs or the operation costs may be significantly reduced.

Another advantage is that in addition to having a simple structure the novel equipment cleans more effectively, therefore the probability of it becoming faulty is minimal and does not require frequent maintenance.

Anther feature that also reduces fault-occurrence tendency is that the internal delimiting body and the cavitation inducing elements have appropriate geometrical shapes.

Further details of the equipment according to the invention are presented on the basis of embodiments with reference to figures, wherein:

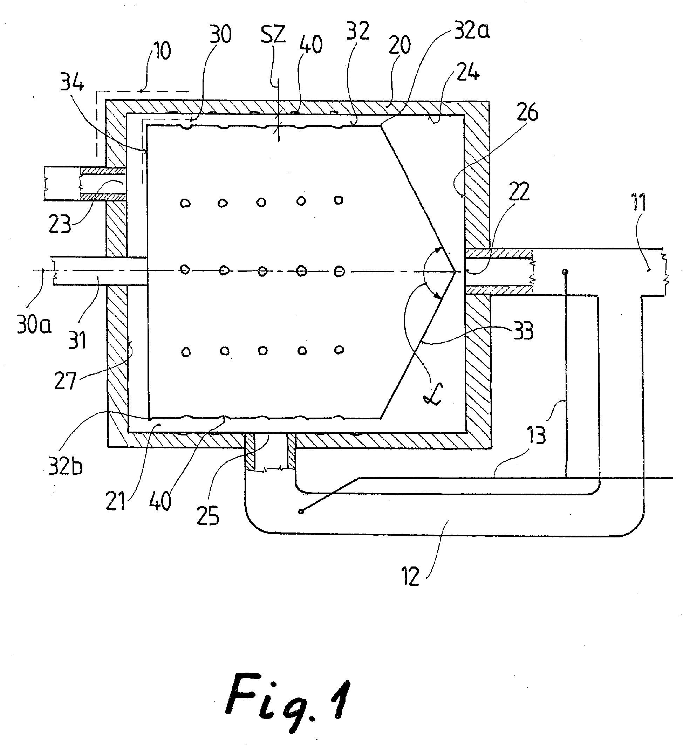

Figure 1 depicts a longitudinal cross-section of a possible embodiment of the equipment according to the invention.

A version of the equipment according to the invention may be seen in figure 1 that is suitable for cleaning contaminated water. It may be observed that the external delimiting body 20 is located in an equipment housing 10, the internal covering surface 24 of which encloses the reaction space 24 where the cavitation cleaning of the water-based material, in this case contaminated water, takes place.

The external delimiting body 20 contains the inlet opening 22, the outlet opening 23 and the post-supply opening 25. The inlet opening 22 is connected to the supply pipe 11 in such a way so as to permit flow of liquid, and it is through this inlet opening 22 that a part of the water-based substance to be cleaned gets into the reaction space 21 of the external delimiting body 20. The inlet opening 22 is located in the closing sheet 26 of the internal covering surface 26 of the external delimiting body 24 so that it falls on the axis of rotation 30a of the rotation axle 30 rotatably located in the reaction space 21 of the external delimiting body 20 and also of the internal delimiting body 30.

The post-supply opening 25 is established in the mantle of the internal covering surface 24 of the external delimiting body 20 so that it is closer to the closing sheet 27 of the internal covering surface 24 of the external delimiting body 20 than to the closing sheet 26. The linking pipe 12, which has a connection to the supply pipe 11, is connected into the post-supply opening 25. The task of the linking pipe 12 is to directly transport a part of the water-based substance to be cleaned directly to the post-supply opening 25, and there take it to the reaction space 21 of the external delimiting body 20.

It should be noted here that the dispensing line 13 may be connected to the supply pipe 11 and to the linking pipe 12 of the equipment, but optionally it may even be connected into the reaction space 21 of the external delimiting body 20 itself. The task of the dispensing line 13 is to insert water with a conductivity of 1-3 µS/cm beside the water-based substance to be cleaned. As the mixing in of water with such physical characteristics increases the effectiveness of the cavitation cleaning, as experience shows.

The task of the outlet opening 23 is to discharge the water-based substance subjected to cleaning from the reaction space 21 of the external delimiting body 20. The outlet opening 23 is established in the closing sheet 27 of the internal covering surface 24 of the external delimiting body 20.

It is also illustrated in figure 1 that cavitation inducing elements 40 are arranged on the internal covering surface 24 of the external delimiting body 20. In this case the cavitation inducing elements 40 are blind-bore-like depressions machined in the mantle surface of the internal covering surface 24 between the closing sheet 26 and the closing sheet 27.

The same such blind-bore-like depressions forming the cavitation inducing elements 40 may also be found in the section of mantle of the external covering surface 32 of the internal delimiting body 30 in the reaction space 21 of the external delimiting body 20 between the end 32a and the end 32b. The end surface 33 of the external covering surface 32 of the internal delimiting body 30 facing the closing sheet 26 of the external delimiting body 20, onto which the water-based substance to be cleaned arriving from the supply pipe 11 through the inlet opening 22 first arrives has a conical shape. The end surface 33 preferably has a cone angle "α" of from 165° to 179°. This geometrical structure is suitable for appropriately guiding the water-based substance to be cleaned flowing through the inlet opening 22 into the cylindrical ring-like section of the reaction space 21 with width "SZ" of 1.5 to 12 mm established between the mantle of the internal covering surface 24 of the external delimiting body 20 and the mantle of the external covering surface 32 of the internal delimiting body 30, where the cavitation cleaning actually takes place.

The end surface 34 of the internal delimiting body 30 located opposite the end surface 33, as shown in figure 1, is a flat circular sheet, and its task is to direct the cleaned water-based substance towards the outlet opening 23 established in the closing sheet 27 of the external delimiting body 20.

Actually the internal delimiting body 30 is held in the reaction space 21 of the external delimiting body 21 by the rotation axle 31 supported by a bearing so that it may rotate in the external delimiting body 20 or the equipment housing 10. The position of the rotation axle 31 of the internal delimiting body 30 and of the inlet opening is such that the inlet opening 22 is established in the external delimiting body 20 in the axis of rotation 30a of the rotation axle 31. Therefore, on the one part, the internal delimiting body 30 is only connected to the external delimiting body 20 and/or to the equipment housing 10 at the end surface 34 via the rotation axle 31, and, on the other part, the water-based material to be cleaned arriving through the inlet opening 22 arrives at the tip of the conical end surface 33 of the internal delimiting body 30. Consequentially the end surface 33 of rotating internal delimiting body 30 essentially "sprays around" the water-based material arriving into the reaction space 21.

During the operation of the equipment according to the invention, after being switched on the driven rotation axle 31 rotates the internal delimiting body 30, while the water-based material flows into the inlet opening 22 through the supply pipe 11 and from there to the end surface 33 of the internal delimiting body 30. And the end surface 33 guides the water-based material to be cleaned entering through the inlet opening 22 to the first part of the reaction space 21 near to the end surface 33.

During this water-based substance to be cleaned also flows into the post-supply opening 25 via the linking pipe 12 that is in a connection with the supply pipe 11 that permits liquid to flow, which post-supply opening 25 opens out into the reaction space 21 in a second part of the reaction space 21 more distant from the end surface 33 e.

Due to the rotation of the internal delimiting body 30 and the contributory effect of the cavitation inducing elements 40 located on the external covering surface 32 of the internal delimiting body 30 and the cavitation inducing elements 40 located on the internal covering surface 24 of the external delimiting body 20, the cavitation cleaning process starts in the water-based substance transported into the reaction space 21 through the inlet opening 22 in the following way.

The water-based substance to be cleaned arriving between the external covering surface 32 and the internal covering surface 24 progresses axially from the direction of the closing sheet 26 of the external delimiting body 20 in the direction of the closing sheet 27 of the external delimiting body 20 into the narrow reaction space 21. During this the rotating external covering surface 32 of the internal delimiting body 30 exerts a shear force onto the water-based substance to be cleaned and due to the effect of the cavitation inducing elements 40 located on the external covering surface 32 and the shear force the pressure drops creating bubbles in the water-based material to be cleaned and in its bulk phase.

The physical and chemical phenomena occurring as a result of the implosion of the bubbles facilitate the biological and chemical cleaning of the substance to be cleaned, as well as the hydrolytic degradation of the dissolved organic substances. Chemical processes occurring in the cavitation step used in the cleaning process also facilitate the cleaning of the substance. The physical effect created in the equipment is the phenomenon of the shock wave occurring during cavitation, which promotes disintegration of the material at both the micro and nano levels. While the chemical effect is that active radicals are created during the implosion of the cavitation cavities, i.e. bubbles saturated with steam created during the cavitation, and as the OH radical diffuse in the bulk phase of the substance to be cleaned they react with the biological and other contaminant materials present there thereby facilitating breakdown, oxidation, phase separation and so cleaning.

On the basis of observations, however, the cleaning effect can be improved by increasing the number of cavitation bubbles and concentrating them in the water-based substance to be cleaned. With consideration to this, a part of the water-based substance to be cleaned is not transported into the reaction space 21 via the inlet opening 22, instead through the post-supply opening 25 on the side of the external delimiting body 20. The water-based substance to be cleaned flowing from the linking pipe 12 through the post-supply opening 25 into the rear part of the reaction space 21 of the external delimiting body 20 does not yet contain cavitation bubbles, so there are no cavitation bubbles present in the water-based substance to be cleaned introduced into the reaction space 21 through the post-supply opening 25 during the rotation of the internal delimiting body 30. Therefore the cleaning effect of the cavitation bubbles created in the water-based substance to be cleaned is suitably intense, and so they effectively clean the water-based substance introduced through the post-supply opening 25.

In addition to all this the water-based substance to be cleaned introduced through the inlet opening 22 into the reaction space 21 progresses in the direction of the outlet opening 23 and reaches the post-supply opening 25 after being enriched with cavitation bubbles, where it comes into contact with water-based material to be cleaned that is free of cavitation bubbles. Here the saturated water-based substance is mixed with the unsaturated substance and as a result of the dilution the cleaning efficiency may be improved once again.

Finally the cleaned water-based substance passes all along the mantle surface of the internal covering surface 24 of the external delimiting body 20 and along the mantle surface of the external covering surface 32 of the internal delimiting body 30 and reaches the closing sheet 27 of the external delimiting body 20. Here changing its direction between the closing sheet 27 of the external delimiting body 20 and the end surface 34 of the internal delimiting body 30 the water-based substance progresses towards the outlet opening 23, then leaves the reaction space 21 of the equipment through it.

In the case of this embodiment a dispensing line 13 is connected to the supply pipe 11 and to the linking pipe 12 through which water with a conductance of 1 to 3 µS/cm is introduced into the supply pipe 11 and into the linking pipe 12 in order to improve the effectiveness of the cleaning of the water-based substance. The water added with a conductance of 1 to 3 µS/cm improves the cleaning effect of the cavitation bubbles created in the reaction space 21.

In the following the method according to the invention is presented in detail with reference to an example.

### Example 1:

In the given example industrial wastewater with a high KOI value of 75 g/L was cleaned in the method according to the invention. In the course of this a part of the water-based substance to be cleaned was introduced into the supply pipe 11, while another part of it was introduced into the linking pipe 12, and there water with conductivity of 1 to 3 µS/cm was released into the dispensing line 13 and mixed with the water-based substance to be cleaned with the help of the dispensing line 13. Then the water-based substance to be cleaned flowing in the supply pipe 11 and the water-based substance to be cleaned flowing in the linking pipe 12 was respectively introduced into the reaction space 21 of the external delimiting body 20 through the inlet opening 22 and through the post-supply opening 25.

The speed of rotation of the rotating rotation axle 31 of the internal delimiting body 30 was set to 1,500-2,900 1/min, preferably 1,500-2,200 1/min. The flow rate of the water-based substance to be cleaned was adjusted to 15-50 litre/min, preferably 20-30 litre/min, and in this way the substance to be cleaned was treated in the cavitation space of the reaction space 21 for between 1 to 120 seconds, preferably for 40 to 60 seconds, even more preferably for 1 to 20 seconds, while the temperature of the reaction space 21 was maintained at room temperature.

The width "SZ" of the reaction space 21 between the internal covering surface 24 of the external delimiting body 20 and the external covering surface 32 of the internal delimiting body 24 was set to a value of between 1 to 12 mm, preferably to between 8 to 12 mm with consideration to the substance cleaned in the given example. However, it should be noted that this width may be even between 1 to 5 mm depending on the characteristics of the substance to be cleaned.

In the course of the given process the entire water-based substance to be cleaned was introduced into the reaction space 21 at two independent locations at different regions of the reaction space 21, and in this way it was ensured that the cavitation bubbles exerting the cleaning effect do not become concentrated to an extent greater than that desired in the water-based substance to be cleaned. With this the cleaning efficiency of the equipment was improved.

It was found that after the cavitation cleaning was performed with the method according to the invention the KOI value was significantly reduced, as was the colony count in the case of bacterial infections. In the given case the KOI reduction was 90 to 97% in the cleaned water, while in the case of bacterial infection the colony count dropped from 300 to 0.

The equipment and method according to the invention may be used effectively in those locations where the cleaning of water-based substances needs to be performed using a simple device, with a favourable energy use level, without the addition of chemicals, optionally with the addition of minimal radical-forming material, which cleaning is effective and may be performed at a favourable cost level.

**List of references**

| | | | |
|---|---|---|---|
| 10 | equipment housing | 11 | supply pipe |
| | | 12 | linking pipe |
| | | 13 | dispensing line |
| 20 | external delimiting body | 21 | reaction space |
| | | 22 | inlet opening |
| | | 23 | outlet opening |
| | | 24 | internal covering surface |
| | | 25 | post-supply opening |
| | | 26 | closing sheet |
| | | 27 | closing sheet |
| 30 | internal delimiting body | 30a | axis of rotation |
| | | 31 | rotation axle |
| | | 32 | external covering surface |
| | | 32a | end |
| | | 32b | end |
| | | 33 | end surface (first) |
| | | 34 | end surface (second) |
| 40 | cavitation inducing element | | |
| "SZ" | width | | |
| "α" | cone angle | | |

## Claims

1. Equipment for the cavitation cleaning of water-based substances, which contains an external delimiting body (20) enclosing a reaction space (21), and an internal delimiting body (30) rotatably positioned in the reaction space (21) of the external delimiting body (20), where the internal delimiting body (30) has a rotation axle (31), the external delimiting body (20) and the internal delimiting body (30) are arranged in an equipment housing (10), the external delimiting body (20) is supplied with at least one inlet opening (22) suitable for introducing the substance to be cleaned, and an outlet opening (23) serving for discharging the cleaned substance, the internal delimiting body (30) is delimited by a rotating body mantle shaped external covering surface (32) and by end surfaces (33, 34) closing off two ends (32a, 32b) of the external covering surface (32), while the external delimiting body (20) has a cylindrical mantle shaped internal covering surface (24) encompassing the reaction space (21), the external covering surface (32) of the internal delimiting body (30) and the internal covering surface (24) of the external delimiting body (20) are coaxial with each other, the internal delimiting body (30) has cavitation inducing elements (40) suitable for influencing the physical characteristics of the substance to be cleaned, the rotation axle (31) is firmly fixed to the internal delimiting body (30) coaxially to the axis of rotation of the internal delimiting body (30), but only at the second end surface (34) of the internal delimiting body (30), and therefore the rotation axle (31) is only rotatably connected to the external delimiting body (20) at one location, while the inlet opening (22) is located in the external delimiting body (20) opposite the first end surface (33) of the internal delimiting body (30), the outlet opening (23) is formed in the external delimiting body (20) opposite the second closing surface (34) of the external delimiting body (20) closing off the internal delimiting body (30), **characterised by** that at least one post-supply opening (25) is established in the part of the internal covering surface (24) of the external delimiting body (20) neighbouring the external covering surface (32) of the internal delimiting body (30), and the post-supply opening (25) is connected to the supply pipe (11) connected to the inlet opening (22) via a linking pipe (12) so as to allow the flow of liquid.

2. Equipment according to claim 1, **characterised by** that a dispensing line (13) suitable for discharging water with conductivity of 1 to 3 µS/cm is linked to the supply pipe (11) and/or to the linking pipe (25) and/or to the reaction space (21) of the external delimiting body (20).

3. Equipment according to claim 1 or 2, **characterised by** that the end surface (33) closing off the end (32a) of the external covering surface (32) of the internal delimiting body (30) at the inlet opening (22) of the external delimiting body (20) is conical in shape.

4. Equipment according to claim 3, **characterised by** that cone angle of the end surface (33) of the internal delimiting body (30) is preferably between 165° and 179°.

5. Equipment according to any of claims 1 to 4, **characterised by** that cavitation inducing elements (40) of the external covering surface (32) of the internal delimiting body (30) are formed by an arranged group of depressions machined into the external covering surface (32) of the internal delimiting body (30).

6. Equipment according to any of claims 1 to 5, **characterised by** that in addition to the cavitation inducing elements (40) arranged in the external covering surface (32) of the internal delimiting body (30), further cavitation inducing elements (40) are arranged in the internal covering surface (24) of the external delimiting body (20).

7. Equipment according to any of claims 1 to 6, **characterised by** that an arranged group of depressions machined in the internal covering surface (24) of the external delimiting body (20) form the cavitation inducing elements (40) located on the internal covering surface (24) of the external delimiting body (20).

8. Equipment according to any of claims 1 to 7, **characterised by** that the width (SZ) of the cylindrical ring shaped gap located between the internal covering surface (24) of the external delimiting body (20) and the external covering surface (32) of the inner delimiting body (30) is between 1.5 and 12 mm.

9. Equipment according to any of claims 1 to 8, **characterised by** that the outlet opening (23) serving for discharging the cleaned substance is established in the part of the closing sheet (27) of the external delimiting body (20) opposite the second end surface (34) of the internal delimiting body (30) in the vicinity of the internal covering surface (24).

10. Method for the cavitation cleaning of waters-based substances by the equipment according to claim 1, during which a substance to be cleaned is transported from a supply pipe (11) through the inlet opening (22) to the first end surface (33) of the rotating internal delimiting body (30) and introduced into the reaction space (21) delimited by the internal covering surface (24) of the external delimiting body (20) standing along this closed first end surface (33) and by the external covering surface (32) of the rotating inner delimiting body (30), the substance to be cleaned introduced into the reaction space (21) is forced to flow in an axial direction, and a shear force is exerted onto the axially flowing substance to be cleaned with the help of the external covering surface (32) of the rotating internal delimiting body (30), beside which bubbles are formed in the block phase of the substance to be cleaned by the cavitation inducing elements (40) established in the external covering surface (32) of the rotating internal delimiting body (30), and the cleaning of the substance to be cleaned is performed by the cavitation effect resulting in shock waves created when the bubbles burst, **characterised by** that a part of the substance to be cleaned is directed into the linking pipe (12) connected to the supply pipe (11), and is directly guided onto the external covering surface (32) of the internal delimiting body (30) via the linking pipe (12) and out through the post-supply opening (25) and in this way the treating of the entire amount of substance to be cleaned is performed with the use of at least two independent supply points, and the cleaned substance is discharged from the reaction space (21) after a treating time of from 1 to 120 seconds.

11. Method according to claim 10, **characterised by** that water with a conductivity of 1 to 3 µS/cm is inserted into the substance to be cleaned in the supply pipe (11) and/or in the linking pipe (25) and/or in the reaction space (21) of the external delimiting body (20), and this is mixed with the substance to be cleaned and then the cleaning is performed in this way.

## Patentansprüche

1. Vorrichtung zur Kavitationsreinigung von wasserbasierten Substanzen, die einen einen Reaktionsraum (21) umschließenden äußeren Begrenzungskörper (20) und einen in dem Reaktionsraum (21) des äußeren Begrenzungskörpers (20) drehbar angeordneten inneren Begrenzungskörper (30) umfasst, wobei der innere Begrenzungskörper (30) eine Drehachse (31) aufweist, wobei der äußere Begrenzungskörper (20) und der innere Begrenzungskörper (30) in einem Gerätegehäuse (10) angeordnet sind, wobei der äußere Begrenzungskörper (20) mit mindestens einer zum Einbringen der zu reinigenden Substanz geeigneten Einlassöffnung (22) und einer zum Ausgeben der gereinigten Substanz dienenden Auslassöffnung (23) versehen ist, wobei der innere Begrenzungskörper (30) durch eine rotierende, mantelförmige äußere Abdeckfläche (32) und durch Endflächen (33, 34), die zwei Enden (32a, 32b) der äußeren Abdeckfläche (32) abschließen, begrenzt ist, während der äußere Begrenzungskörper (20) eine zylindrische mantelförmige innere Abdeckfläche (24) aufweist, die den Reaktionsraum (21) umschließt, wobei die äußere Abdeckfläche (32) des inneren Begrenzungskörpers (30) und die innere Abdeckfläche (24) des äußeren Begrenzungskörpers (20) koaxial zueinander sind, wobei der innere Begrenzungskörper (30) kavitationsinduzierende Elemente (40) aufweist, die dafür geeignet sind, die physikalischen Eigenschaften der zu reinigenden Substanz zu beeinflussen, wobei die Drehachse (31) koaxial zu der Drehachse des inneren Begrenzungskörpers (30) fest mit dem inneren Begrenzungskörper (30) verbunden ist, jedoch nur an der zweiten Endfläche (34) des inneren Begrenzungskörpers (30), und wobei somit die Drehachse (31) nur an einer Stelle drehbar mit dem äußeren Begrenzungskörper (20) verbunden ist, während die Einlassöffnung (22) in dem äußeren Begrenzungskörper (20) gegenüber der ersten Endfläche (33) des inneren Begrenzungskörpers (30) angeordnet ist, wobei die Auslassöffnung (23) in dem äußeren Begrenzungskörper (20) gegenüber der zweiten Abschlussfläche (34) des äußeren Begrenzungskörpers (20), die den inneren Begrenzungskörper (30) abschließt, ausgebildet ist, **dadurch gekennzeichnet, dass** in dem der äußeren Abdeckfläche (32) des inneren Begrenzungskörpers (30) benachbarten Teil der inneren Abdeckfläche (24) des äußeren Begrenzungskörpers (20) mindestens eine Nachspeiseöffnung (25) ausgebildet ist, wobei die Nachspeiseöffnung (25) über eine Verbindungsleitung (12) mit der an die Einlassöffnung (22) angeschlossenen Zuleitung (11) verbunden ist, um den Durchfluss von Flüssigkeit zu ermöglichen.

2. Vorrichtung nach Anspruch 1, **dadurch gekennzeichnet, dass** an die Zuleitung (11) und/oder an die Verbindungsleitung (25) und/oder an den Reaktionsraum (21) des äußeren Begrenzungskörpers (20) eine zur Ableitung von Wasser mit einer Leitfähigkeit von 1 bis 3 µS/cm geeignete Abgabeleitung (13) angeschlossen ist.

3. Vorrichtung nach Anspruch 1 oder 2, **dadurch gekennzeichnet, dass** die das Ende (32a) der äußeren Abdeckfläche (32) des inneren Begrenzungskörpers (30) an der Einlassöffnung (22) des äußeren Begrenzungskörpers (20) abschließende Endfläche (33) konisch ausgebildet ist.

4. Vorrichtung nach Anspruch 3, **dadurch gekennzeichnet, dass** der Konuswinkel der Endfläche (33) des inneren Begrenzungskörpers (30) vorzugsweise zwischen 165° und 179° liegt.

5. Vorrichtung nach einem der Ansprüche 1 bis 4, **dadurch gekennzeichnet, dass** kavitationsinduzierende Elemente (40) der äußeren Abdeckfläche (32) des inneren Begrenzungskörpers (30) durch eine angeordnete Gruppe von in die äußere Abdeckfläche (32) des inneren Begrenzungskörpers (30) maschinell eingearbeiteten Vertiefungen gebildet sind.

6. Vorrichtung nach einem der Ansprüche 1 bis 5, **dadurch gekennzeichnet, dass** zusätzlich zu den in der äußeren Abdeckfläche (32) des inneren Begrenzungskörpers (30) angeordneten kavitationsinduzierenden Elementen (40) weitere kavitationsinduzierende Elemente (40) in der inneren Abdeckfläche (24) des äußeren Begrenzungskörpers (20) angeordnet sind.

7. Vorrichtung nach einem der Ansprüche 1 bis 6, **dadurch gekennzeichnet, dass** eine angeordnete Gruppe von in die innere Abdeckfläche (24) des äußeren Begrenzungskörpers (20) maschinell eingearbeiteten Vertiefungen die auf der inneren Abdeckfläche (24) des äußeren Begrenzungskörpers (20) angeordneten kavitationsinduzierenden Elemente (40) bilden.

8. Vorrichtung nach einem der Ansprüche 1 bis 7, **dadurch gekennzeichnet, dass** die Breite (SZ) des zylindrischen, ringförmigen Spalts, der zwischen der inneren Abdeckfläche (24) des äußeren Begrenzungskörpers (20) und der äußeren Abdeckfläche (32) des inneren Begrenzungskörpers (30) angeordnet ist, zwischen 1,5 und 12 mm beträgt.

9. Vorrichtung nach einem der Ansprüche 1 bis 8, **dadurch gekennzeichnet, dass** die zum Ausgeben der gereinigten Substanz dienende Auslassöffnung (23) in dem der zweiten Endfläche (34) des inneren Begrenzungskörpers (30) gegenüberliegenden Teil der Verschlussplatte (27) des äußeren Begrenzungskörpers (20) in der Nähe der inneren Abdeckfläche (24) ausgebildet ist.

10. Verfahren zur Kavitationsreinigung von wasserbasierten Substanzen durch die Vorrichtung nach Anspruch 1, bei dem eine zu reinigende Substanz von einer Zuleitung (11) durch die Einlassöffnung (22) zu der ersten Endfläche (33) des rotierenden inneren Begrenzungskörpers (30) transportiert und in den von der entlang dieser geschlossenen ersten Endfläche (33) stehenden inneren Abdeckfläche (24) des äußeren Begrenzungskörpers (20) und von der äußeren Abdeckfläche (32) des rotierenden inneren Begrenzungskörpers (30) begrenzten Reaktionsraum (21) eingebracht wird, wobei die in den Reaktionsraum (21) eingebrachte zu reinigende Substanz gezwungen wird, in einer axialen Richtung zu fließen, und wobei mit Hilfe der äußeren Abdeckfläche (32) des rotierenden inneren Begrenzungskörpers (30) eine Scherkraft auf die axial fließende zu reinigende Substanz ausgeübt wird, wobei in der Blockphase der zu reinigenden Substanz durch die in der äußeren Abdeckfläche (32) des rotierenden inneren Begrenzungskörpers (30) ausgebildeten kavitationsinduzierenden Elemente (40) Blasen gebildet werden, und wobei die Reinigung der zu reinigenden Substanz durch den Kavitationseffekt erfolgt, der zu Stoßwellen führt, die beim Platzen der Blasen entstehen, **dadurch gekennzeichnet, dass** ein Teil der zu reinigenden Substanz in die mit der Zuleitung (11) verbundene Verbindungsleitung (12) geleitet wird und über die Verbindungsleitung (12) direkt auf die äußere Abdeckfläche (32) des inneren Begrenzungskörpers (30) und durch die Nachspeiseöffnung (25) nach außen geleitet wird, wobei auf diese Weise die Behandlung der gesamten Menge der zu reinigenden Substanz unter Verwendung von mindestens zwei unabhängigen Zuführungsstellen erfolgt, und wobei die gereinigte Substanz nach einer Behandlungszeit von 1 bis 120 Sekunden aus dem Reaktionsraum (21) ausgegeben wird.

11. Verfahren nach Anspruch 10, **dadurch gekennzeichnet, dass** in der Zuleitung (11) und/oder in der Verbindungsleitung (25) und/oder in dem Reaktionsraum (21) des äußeren Begrenzungskörpers (20) Wasser mit einer Leitfähigkeit von 1 bis 3 µS/cm in die zu reinigende Substanz eingebracht wird, wobei dieses mit der zu reinigenden Substanz vermischt wird und dann die Reinigung auf diese Weise durchgeführt wird.

## Revendications

1. Équipement pour le nettoyage par cavitation de substances aqueuses, qui contient un corps de délimitation externe (20) entourant un espace réactionnel (21), et un corps de délimitation interne (30) positionné de manière rotative dans l'espace réactionnel (21) du corps de délimitation externe (20), où le corps de délimitation interne (30) présente un axe de rotation (31), le corps de délimitation externe (20) et le corps de délimitation interne (30) sont disposés dans un boîtier d'équipement (10), le corps de délimitation externe (20) est alimenté par au moins un orifice d'admission (22) adapté pour introduire la substance à nettoyer, et un orifice de sortie (23) servant à évacuer la substance nettoyée, le corps de délimitation interne (30) est délimité par une surface de recouvrement externe (32) en forme de manchon à corps rotatif et par des surfaces d'extrémité (33, 34) fermant les deux extrémités (32a, 32b) de la surface de recouvrement externe (32), tandis que le corps de délimitation externe (20) présente une surface de recouvrement interne (24) en forme de manchon cylindrique englobant l'espace réactionnel (21), la surface de recouvrement externe (32) du corps de délimitation interne (30) et la surface de recouvrement interne (24) du corps de délimitation externe (20) sont coaxiales l'une par rapport à l'autre, le corps de délimitation interne (30) présente des éléments inducteurs de cavitation (40) adaptés pour agir sur les caractéristiques physiques de la substance à nettoyer, l'axe de rotation (31) est solidement fixé au corps de délimitation interne (30) de façon coaxiale à l'axe de rotation du corps de délimitation interne (30), mais seulement au niveau de la seconde surface d'extrémité (34) du corps de délimitation interne (30), et par conséquent l'axe de rotation (31) est relié de manière rotative uniquement au corps de délimitation externe (20) au niveau d'un emplacement, tandis que l'orifice d'admission (22) est situé dans le corps de délimitation externe (20) à l'opposé de la première surface d'extrémité (33) du corps de délimitation interne (30), l'orifice de sortie (23) est formé dans le corps de délimitation externe (20) à l'opposé de la deuxième surface de fermeture (34) du corps de délimitation externe (20) fermant le corps de délimitation interne (30), **caractérisé en ce qu'**au moins un orifice de post-alimentation (25) est établi dans la partie de la surface de recouvrement interne (24) du corps de délimitation externe (20) avoisinant la surface de recouvrement externe (32) du corps de délimitation interne (30), et l'orifice de post-alimentation (25) est relié à la conduite d'alimentation (11) relié à l'orifice d'admission (22) par l'intermédiaire d'une conduite de liaison (12) de façon à permettre l'écoulement de liquide.

2. Équipement selon la revendication 1, **caractérisé en ce qu'**une ligne de distribution (13) adaptée à évacuer l'eau avec une conductivité de 1 à 3 µS/cm est liée à la conduite d'alimentation (11) et/ou à la conduite de liaison (25) et/ou à l'espace réactionnel (21) du corps de délimitation externe (20).

3. Équipement selon la revendication 1 ou 2, **caractérisé en ce que** la surface d'extrémité (33) fermant l'extrémité (32a) de la surface de recouvrement externe (32) du corps de délimitation interne (30) au niveau de l'orifice d'admission (22) du corps de délimitation externe (20) est de forme conique.

4. Équipement selon la revendication 3, **caractérisé en ce que** l'angle de cône de la surface d'extrémité (33) du corps de délimitation interne (30) est de préférence compris entre 165° et 179°.

5. Équipement selon l'une quelconque des revendications 1 à 4, **caractérisé en ce que** les éléments inducteurs de cavitation (40) de la surface de recouvrement externe (32) du corps de délimitation interne (30) sont formés par un groupe agencé de renfoncements usinés dans la surface de recouvrement externe (32) du corps de délimitation interne (30).

6. Équipement selon l'une quelconque des revendications 1 à 5, **caractérisé en ce qu'**outre les éléments inducteurs de cavitation (40) agencés dans la surface de recouvrement externe (32) du corps de délimitation interne (30), d'autres éléments inducteurs de cavitation (40) sont agencés dans la surface de recouvrement interne (24) du corps de délimitation externe (20).

7. Équipement selon l'une quelconque des revendications 1 à 6, **caractérisé en ce qu'**un groupe agencé de renfoncements usinés dans la surface de recouvrement interne (24) du corps de délimitation externe (20) forment les éléments inducteurs de cavitation (40) situés sur la surface de recouvrement interne (24) du corps de délimitation externe (20).

8. Équipement selon l'une quelconque des revendications 1 à 7, **caractérisé en ce que** la largeur (SZ) de l'espace de forme annulaire cylindrique situé entre la surface de recouvrement interne (24) du corps de délimitation externe (20) et la surface de recouvrement externe (32) du corps de délimitation interne (30) est comprise entre 1,5 et 12 mm.

9. Équipement selon l'une quelconque des revendications 1 à 8, **caractérisé en ce que** l'orifice de sortie (23) servant à évacuer la substance nettoyée est établi dans la partie de la feuille de fermeture (27) du corps de délimitation externe (20) à l'opposé de la seconde surface d'extrémité (34) du corps de délimitation interne (30) à proximité de la surface de recouvrement interne (24).

10. Procédé de nettoyage par cavitation de substances aqueuses par l'équipement selon la revendication 1, au cours duquel une substance à nettoyer est transportée à partir d'une conduite d'alimentation (11) à travers l'orifice d'admission (22) jusqu'à la première surface d'extrémité (33) du corps de délimitation interne rotatif (30) et introduit dans l'espace réactionnel (21) délimité par la surface de recouvrement interne (24) du corps de délimitation externe (20) se tenant le long de cette première surface d'extrémité fermée (33) et par la surface de recouvrement externe (32) du corps de délimitation interne (30) rotatif, la substance à nettoyer introduite dans l'espace réactionnel (21) est entraînée à s'écouler dans une direction axiale, et une force de cisaillement est exercée sur la substance à nettoyer s'écoulant de manière axiale à l'aide de la surface de recouvrement externe (32) du corps de délimitation interne (30) rotatif, près duquel des bulles sont formées dans la phase de bloc de la substance à nettoyer par les éléments inducteurs de cavitation (40) établis dans la surface de recouvrement externe (32) du corps de délimitation interne rotatif (30), et le nettoyage de la substance à nettoyer est effectué par l'effet de cavitation résultant des ondes de choc créées lors de l'éclatement des bulles, **caractérisé en ce qu'**une partie de la substance à nettoyer est dirigée dans la conduite de liaison (12) reliée à la conduite d'alimentation (11), et est directement dirigée sur la surface de recouvrement externe (32) du corps de délimitation interne (30) par l'intermédiaire de la conduite de liaison (12) et hors de l'orifice de post-alimentation (25) et de cette manière le traitement de toute la quantité de substance à nettoyer est effectué à l'aide d'au moins deux points d'alimentation indépendants, et la substance nettoyée est évacuée de l'espace réactionnel (21) après un temps de traitement de 1 à 120 secondes.

11. Procédé selon la revendication 10, **caractérisé en ce que** de l'eau avec une conductivité de 1 à 3 µS/cm est insérée dans la substance à nettoyer dans la conduite d'alimentation (11) et/ou dans la conduite de liaison (25) et/ou dans l'espace réactionnel (21) du corps de délimitation externe (20), et celle-ci est mélangée avec la substance à nettoyer puis le nettoyage est réalisé de cette manière.
